# EUROPÄISCHE PATENTSCHRIFT

(11) **EP 4 136 329 B1**
(45) Veröffentlichungstag und Bekanntmachung des Hinweises auf die Patenterteilung: **26.06.2024**
(21) Anmeldenummer: 21731688.4
(22) Anmeldetag: 21.05.2021
(51) Int. Cl.: F01K 23/10, F22B 1/18

(54) **GAS-UND-DAMPFTURBINEN-KRAFTWERK UND VERFAHREN ZUR NACHRÜSTUNG EINER SOLCHEN**
GAS AND STEAM TURBINE POWER PLANT AND METHOD FOR RETROFITTING SUCH A PLANT
CENTRALE ÉLECTRIQUE À TURBINE À GAZ ET À TURBINE À VAPEUR ET PROCÉDÉ POUR EN COMPLÉTER L'ÉQUIPEMENT

(30) Priorität: 22.06.2020 DE 102020207663
(43) Veröffentlichungstag der Anmeldung: 22.02.2023
(73) Patentinhaber: Siemens Energy Global GmbH & Co. KG, 81739 München (DE)
(72) Erfinder: MIGL, Matthias, 80997 München (DE); SCHWARZ, Ronald, 96052 Bamberg (DE); TSCHETSCHIK, Denis, 91088 Bubenreuth (DE)
(86) Internationale Anmeldenummer: PCT/EP2021/063623
(87) Internationale Veröffentlichungsnummer: WO 2021/259570

(56) Entgegenhaltungen:
- WO-A1-94/29643
- US-A1- 2003 192 737
- US-A1- 2004 088 994
- US-A1- 2005 268 594
- US-A1- 2012 279 596
- US-A1- 2020 102 856

## Beschreibung

Die vorliegende Erfindung betrifft ein Gas-und-Dampfturbinen-Kraftwerk mit einer Gasturbine, die auslassseitig einen Abgasdiffusor aufweist, und einem Abhitzedampferzeuger, welcher über eine Abströmhaube mit der Auslassseite des Abgasdiffusors der Gasturbine verbunden ist, um die in den entspannten Rauchgasen der Gasturbine enthaltene Wärme für die Erzeugung von Dampf in einem Dampfturbinenkreislauf zu nutzen.

Des Weiteren betrifft die Erfindung ein Verfahren zur Nachrüstung eines Gas- und Dampfturbinen-Kraftwerks mit einer Gasturbine, die auslassseitig einen Abgasdiffusor aufweist, und einem Abhitzedampferzeuger, welcher über eine Abströmhaube mit der Auslassseite des Abgasdiffusors der Gasturbine verbunden ist, um die in den entspannten Rauchgasen der Gasturbine enthaltene Wärme für die Erzeugung von Dampf in einem Dampfturbinenkreislauf zu nutzen.

In der kommunalen Energieversorgung werden neben fossilen Kraftwerksanlagen, die mit Dampfturbinen betrieben werden, auch kombinierte Gas- und Dampfturbinenkraftwerke (GuD) eingesetzt, welche die Abwärme eines Gasturbinenkraftwerks in einem Abhitzedampferzeuger, auch Abhitze-Dampfkessel oder Kessel genannt, zur Erzeugung von Wasserdampf nutzen, welcher anschließend über einen herkömmlichen Dampfturbinenprozess entspannt wird. Der Wirkungsgrad solcher Gas- und Dampfturbinen-Kraftwerke liegt bei ca. 60%.

In zunehmendem Maß erfolgt die Energieerzeugung mittels erneuerbarer Energien, wie z.B. der Windkraft. Dauerhaft soll über diese regenerativen Energien ein Großteil des gesamten Energiebedarfs abgedeckt werden. Allerdings stehen die regenerativen Energien nicht kontinuierlich zur Verfügung, so dass der Energiebedarf konventionell abgedeckt werden muss. Dies führt dazu, dass der Strommarkt flexible Kraftwerke erfordert, die über einen großen Lastbereich mit einem ausreichenden Lastgradienten betrieben werden können. Dabei gibt es eine generelle Forderung nach einer Erhöhung der Flexibilität von Gasturbinen- bzw. GuD-Kraftwerken als Stütze für erneuerbare Energieerzeuger.

Generell besteht die Problematik, dass kombinierte Gas- und Dampfturbinen-Kraftwerke bedingt durch die träg reagierenden Abhitzedampferzeuger (AHDE) und Dampfturbinen lange Vorbereitungs- und Anfahrtszeiten benötigen und somit nicht oder nur bedingt geeignet sind, kurzfristig Energiespitzen oder Mindereinspeisungen von regenerativen Energien zu decken. Vielmehr können die für einen gesicherten Netzbetrieb geforderten schnelleren Anfahrtszeiten nur im reinen Gasturbinenbetrieb sichergestellt werden. Um GuD-Kraftwerke im reinen Gasbetrieb fahren zu können, müssen die GuD-Kraftwerke entsprechend ausgerüstet sein. Im Einzelnen muss ein Bypass-Kamin vorgesehen sein, über welchen im reinen Gasturbinen-Betrieb die heißen Abgase der Gasturbine abgeführt werden können. Ferner müssen die Anlagen mit einer Abschottung des Abhitzedampferzeugers ausgerüstet sein, welche eine weitere Zufuhr der heißen Abgase zum Abhitzedampferzeuger verhindert. Wenn der notwendige Bypass-Kamin und die Abschottung des Abhitzedampferzeugers fehlen, bleibt im Fall eines reinen Gasturbinenbetriebs bei diesen Anlagen der Kessel ständig in Betrieb und wird der entstehende Dampf über den Kondensator der Dampfturbine abgeführt. Diese Fahrweise reduziert nicht nur die Lebensdauer des Kessels, sondern wirkt sich auch negativ auf die Wirtschaftlichkeit des Kraftwerks aus. Dokumente US2003/192737, US2012/279596 und WO94/29643 offenbaren Gas-und-Dampfturbinen-Kraftwerke aus dem Stand der Technik.

Eine nachträgliche Implementierung eines Bypass-Kamins und eines Klappensystems zur Absperrung des Abhitzedampferzeugers erfordert derzeit die Verlängerung der gesamten Abgasstrecke verbunden mit einer Verschiebung des gesamten AHDE. Eine Installation des Bypass-Kamins in den vorhandenen Abgaskanal ist zwar möglich, jedoch mit einem sehr hohen Aufwand und technischen Risiken verbunden.

Eine Veränderung der Länge des Abgasdiffusors wirkt sich auf die Strömungsverhältnisse des Abgases aus und kann zu Interferenzen am Turbinenlagerstern führen, welche in Folge eine Minderleistung der Gasturbine und im schlimmsten Falle eine Schädigung bzw. Zerstörung des Turbinenlagersterns nach sich ziehen. Ebenso wirkt sich eine Veränderung der Länge des Abgasdiffusors auf die Strömungsverhältnisse des Abgases in der Anströmhaube aus und kann zu Interferenzen an den Heizflächen führen, welche auch in Folge eine Schädigung bzw. Zerstörung der Heizflächen nach sich ziehen können.

Eine Erfassung des Temperaturkennfeldes im Abgasdiffusor bestimmt die Regelung der Gasturbine. Eine Verlegung der Sensorik, d.h. der Thermosensoren, am Abgasdiffusor aufgrund einer Verkürzung würde eine komplette Analyse des Temperaturkennfeldes und eine erneute Parametrierung der Gasturbineneinstellungen erfordern. Der Kosten- und Zeitaufwand hierfür sind erheblich und zeitlich nur schwer abschätzbar. Somit scheiterten in der Vergangenheit häufig die Bestrebungen nach einer nachträglichen Implementierung eines Bypass-Kamins am notwendigen hohen Platzbedarf für einen nachträglichen Umbau bzw. an der damit einhergehenden Komplexität eines Umbaus gepaart mit hohen finanziellen Aufwendungen.

Aufgabe der Erfindung ist es daher, ein Gas- und Dampfturbinen-Kraftwerk der eingangs genannten Art anzugeben, das eine Umschaltung in einen reinen Gasturbinenbetrieb ohne die beschriebenen Nachteile ermöglicht. Ferner soll ein Verfahren angegeben werden, mit welchem bestehende Gas- und Dampfturbinenkraftwerke in einfacher Weise nachgerüstet werden können, so dass sie auch in einem reinen Gasturbinenbetrieb gefahren werden können.

Diese Aufgabe ist bei einem Gas- und Dampfturbinen-Kraftwerk der eingangs genannten Art dadurch gelöst, dass an die Anströmhaube mehrere Abgasleitungen angeschlossen sind, die oberhalb der Anströmhaube in einen gemeinsamen Bypass-Kamin münden, und dass Absperrmittel in der Anströmhaube vorgesehen sind, um einen Rauchgasstrom von der Gasturbine zu dem Abhitzedampferzeuger in einem geschlossenen Zustand zu unterbrechen und in einem offenen Zustand zu erlauben.

Bei einem Verfahren zur Nachrüstung eines Gas- und Dampfturbinen-Kraftwerks der eingangs genannten Art ist die Aufgabe entsprechend dadurch gelöst, dass die Anströmhaube mit mehreren Öffnungen versehen wird, dass an die Anströmhaube im Bereich der Öffnungen Abgasleitungen angeschlossen werden, so dass diese sich in einen Bereich oberhalb der Anströmhaube erstrecken, und dass in der Anströmhaube Absperrmittel vorgesehen werden, um einen Gasstrom von der Gasturbine zu dem Abhitzedampferzeuger in einem geschlossenen Zustand zu unterbrechen und in einem geöffneten Zustand zu erlauben.

Der vorliegenden Erfindung liegt damit die Überlegung zugrunde, die für einen reinen Gasturbinenbetrieb notwendige Abschottung des Abhitzedampferzeugers im Bereich der Anströmhaube vorzusehen, indem entsprechende Absperrmittel in die Abströmhaube eingebaut werden. In gleicher Weise wird der für den reinen Gasturbinenbetrieb notwendige Bypass-Kamin an die Anströmhaube angebaut. Hierzu werden an die Anströmhaube mehrere Abgasleitungen angeschlossen, die oberhalb der Anströmhaube in den Bypass-Kamin münden. Hierzu werden entsprechende Öffnungen in die Anströmhaube eingebracht. Beispielsweise kann eine Abgasleitung an die Oberseite der Anströmhaube angeschlossen werden, wobei sie dann vorteilhafterweise in die Unterseite des Kamins mündet. Ferner kann wenigstens einen Abgasleitung seitlich an die Anströmhaube angeschlossen werden, wobei insbesondere jeweils eine Abgasleitung an die gegenüberliegende Seite der Anströmhaube angeschlossen wird. Die seitlich an die Anströmhaube angeschlossenen Abgasleitungen münden dabei zweckmäßigerweise in den unteren Endbereich des Bypass-Kamins auf gegenüberliegenden Seiten von diesem, wobei der untere Endbereich bevorzugt sich nach unten hin verjüngend ausgebildet ist.

Das aerodynamische Gewicht in den Abgasleitungen wird durch die Auslegung des Durchmessers aller Abgasleitungen gewährleistet. Die statische Stabilität wird durch eine Stützenkonstruktion, welche den Bypass-Kamin trägt, bestimmt. Durch die Abgasführung über mehrere Abgasleitungen anstatt einer Abgasführung über einen großen Kanal kann der Platzbedarf für eine notwendige Abgasführung deutlich reduziert werden. Das aerodynamische Profil und die Auslegung der Abgasleitungen muss im Einzelfall mittels CFD-Studie bestimmt werden.

Gemäß einer Ausführungsform der Erfindung ist vorgesehen, dass die Absperrmittel eine Guillotine aufweisen, die in vertikaler Richtung zwischen einer oberen Öffnungsstellung, in der sie den Gasstrom von der Gasturbine zu dem Abhitzedampferzeuger freigibt, und einer unteren Schließstellung, in welcher sie einen Gasstrom von der Gasturbine zu dem Abhitzedampferzeuger unterbricht, bewegbar geführt ist.

Hierzu wird aus der Anströmhaube ein Teil herausgetrennt, um einen Einbauraum zu schaffen, in welchem die Absperrmittel, beispielsweise die Guillotine, vorgesehen, bzw. montiert werden. In bevorzugter Weise werden an den Schnittstellen zwischen der Anströmhaube und der Guillotine Bleche, insbesondere in Rinnenform, zur Halterung der Guillotine vorgesehen.

Um die Absperrmittel anströmseitig mit Sperrluft zu versorgen und so die Gasdichtheit der Absperrmittel im geschlossenen Zustand zu gewährleisten, ist gemäß einer Ausführungsform der Erfindung auf der Gasturbinenseite der Absperrmittel eine Sperrluftzuführung an die Anströmhaube angeschlossen. Die Zufuhr der Kühlluft erfolgt dabei bevorzugt von der Unterseite der Anströmhaube her.

Weiterhin kann auf der zum Abhitzedampferzeuger weisenden Seite der Absperrmittel eine Kühlluftzuführung an die Anströmhaube angeschlossen sein/werden, um die Absperrmittel abströmseitig über zugeführte Kühlluft im geschlossenen Zustand zu kühlen.

In üblicher Weise kann der Bypass-Kamin einen Schalldämpfer aufweisen. Ebenso kann im Bypass-Kamin eine Abgasklappe vorgesehen sein, welche ausgebildet ist, einen Abgasstrom durch den Bypass-Kamin im geschlossenen Zustand zu unterbrechen und geöffneten Zustand zu erlauben.

Die erfindungsgemäße Ausgestaltung eines Gas- und Dampfturbinen-Kraftwerks mit einem an die Anströmhaube über mehrere Abgasleitungen angeschlossenen Bypass-Kamin und einer in die Abgashaube eingebauten Abschottung des AHDE, d.h. die in die Anströmhaube eingebauten Absperrmittel, ist eine Kostengünstige Nachrüstung von bereits existierenden GuD-Kraftwerken möglich. Dabei können am Markt vorhandene Komponenten wie Bypass-Kamin inklusive Schalldämpfer und Abgasklappe sowie die Guillotine verwendet werden. Durch die Nachrüstung ist es möglich, GuD-Kraftwerke im reinen Gasturbinenbetrieb zu fahren, ohne dass die Lebensdauer der druckführenden Teile des AHDE und der Dampfturbine hierunter leiden. Durch den reinen Gasturbinenbetrieb wird die Bandbreite des Betriebsregimes eines GuD-Kraftwerks von 50 bis 100% auf 15 bis 100% Lastbetrieb erweitert, was den Einsatz als Spitzenlastkraftwerk, zur Frequenzstütze sowie zur Blindleistungskompensation ermöglicht.

Der wesentliche Vorteil der Erfindung liegt in der Entkopplung des Gasturbinenbetriebs vom Betrieb des Heizdampfteils und der Dampfturbine sowie der Möglichkeit des separaten Anfahrens und des Betriebs der Gasturbiene im offenen Betrieb (Solobetrieb). Dadurch wird ein hoher Flexibilisierungsgrad im Betrieb der Anlage erreicht.

Nachfolgend wird ein Ausführungsbeispiel der Erfindung unter Bezugnahme auf die beiliegende Zeichnung beschrieben. In der Zeichnung zeigt
Figur 1 den Übergangsbereich zwischen einem Gasturbinenabschnitt und einem Abhitzedampferzeuger eines erfindungsgemä-ßen Gas- und Dampfturbinen-Kraftwerks und
Figur 2 einen an einer Anschlusshaube des Gas- und Dampfturbinen-Kraftwerks angeschlossenen Bypass-Kamin gemäß der vorliegenden Erfindung.

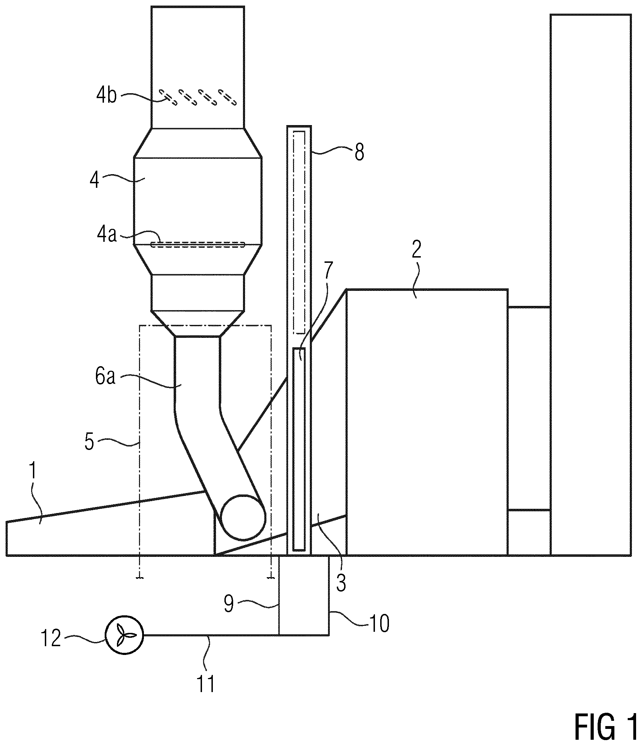

Die Figur 1 zeigt schematisch den Übergangsbereich zwischen einem Gasturbinenabschnitt und einem Abhitzedampferzeuger eines erfindungsgemäßen Gas- und Dampfturbinen-Kraftwerks. Konkret dargestellt ist der Übergang zwischen einer Gasturbine, von welcher lediglich der an der Ausgangsseite der Gasturbine vorgesehene Abgasdiffusor 1 gezeigt ist, und einem Abhitzedampferzeuger (AHDE) 2, welcher über eine Anströmhaube 3 mit der Auslassseite des Abgasdiffusors 1 der Gasturbine verbunden ist, um die in den entspannten Rauchgasen/Abgasen der Gasturbine enthaltene Wärme für die Erzeugung von Dampf in einem nicht näher dargestellten Dampfturbinenkreislauf zu nutzen.

Erfindungsgemäß ist das GuD-Kraftwerk ausgestaltet, um auch in einem reinen Gasturbinenbetrieb optimal gefahren werden zu können. Hierzu ist ein Bypass-Kamin 4 vorgesehen, welcher oberhalb des Abgasdiffusors 1 und der Anströmhaube 3 positioniert ist und über eine Stützkonstruktion 5 abgestützt ist. Der Bypass-Kamin 4 ist in herkömmlicher Weise ausgebildet und umfasst einen eingebauten Schalldämpfer 4a, sowie eine Abgasklappe 4b, welche ausgebildet ist, einen Abgasstrom durch den Bypass-Kamin 4 im geschlossenen Zustand zu unterbrechen und im geöffneten Zustand zu erlauben.

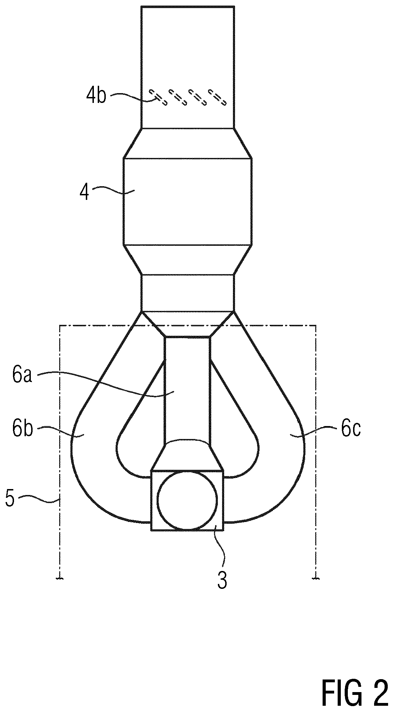

Der Bypass-Kamin 4 ist an die Anströmhaube 3 angeschlossen und mit dieser über hier drei Abgasleitungen 6a, 6b, 6c verbunden. Wie insbesondere in der Figur 2 erkennbar ist, ist eine erste Abgasleitung 6a an die Oberseite der Anströmhaube 3 angeschlossen und mündet in die Unterseite des Bypass-Kamins 4. Weiterhin sind zwei Abgasleitungen 6b, 6c seitlich an die Anströmhaube 3 auf gegenüberliegenden Seiten von dieser angeschlossen und münden in den unteren Endbereich des Bypass-Kamins 4 auf gegenüberliegenden Seiten von diesem. Wie in der Figur 2 erkennbar ist, verjüngt sich der untere Endbereich nach unten hin, so dass die seitlichen Abgasleitungen 6b, 6c schräg in den Bypass-Kamin 4 münden.

Bei dieser Konstruktion wird das aerodynamische Gewicht in den Abgasleitungen 6a, 6b, 6c durch entsprechende Auslegungen der Durchmesser aller Abgasleitungen 6a, 6b, 6c gewährleistet, während die statische Stabilität durch die Stützkonstruktion 5, welche den Bypass-Kamin 4 trägt, bestimmt wird.

Zur Abschottung des Abhitzedampferzeugers 2 in einem reinen Gasturbinenbetrieb ist in die Anströmhaube 3 ein Absperrmittel in der Form einer Guillotine 7 eingebaut, die in vertikaler Richtung zwischen einer oberen Öffnungsstellung, in der sie einen Gasstrom von der Gasturbine/dem Abgasdiffusor 1 zu dem Abhitzedampferzeuger 2 freigibt, und einer unteren Schließstellung, in welcher sie den Strömungskanal der Anströmhaube 3 vollständig verschließt und somit einen Gasstrom von der Gasturbine zu dem Abhitzedampferzeuger 2 unterbricht, bewegbar geführt. Hierzu ist ein Führungsgerüst 8 vorgesehen, welches die Guillotine 7 trägt. Ferner sind an den Rändern der Guillotine 7 und an der Innenseite der Anströmhaube 3 entsprechende Führungsmittel zur Halterung/Führung der Guillotine 7 vorgesehen. Diese können als Bleche, insbesondere in Rinnenform, ausgebildet sein.

Um die Guillotine 7 anströmseitig mit Sperrluft zu versorgen und so die Gasdichtheit der Guillotine 7 im geschlossenen Zustand zu gewährleisten, ist an die Anströmhaube 3 eine Sperrluftzuführung 9 angeschlossen, über welche die Guillotine 7 gasturbinenseitig von der Unterseite der Anströmhaube her mit Sperrluft überströmt werden kann.

Weiterhin ist auf der zum Abhitzedampferzeuger 2 weisenden Seite der Guillotine 7 eine Kühlluftzuführung 10 an die Anströmhaube 3 angeschlossen, um die Guillotine 7 auch abströmseitig, d.h. AHDE-seitig über zugeführte Kühlluft im geschlossenen Zustand zu kühlen. Die Zufuhr der Kühlluft erfolgt auch hier von der Unterseite der Anströmhaube 3 her. Die Sperrluft/Kühlluft wird über eine gemeinsame Leitung 11 zugeführt und über einen angeschlossenen Ventilator 12 transportiert.

Wenn das so ausgestattete GuD-Kraftwerk im kombinierten Gasturbinen- und Dampfturbinenbetrieb läuft, befindet sich die Guillotine 7 in ihrer oberen Öffnungsstellung und ist die Abgasklappe 4b im Bypass-Kamin 4 geschlossen, so dass die hei-ßen Rauchgase/Abgase der Gasturbine vom Abgasdiffusor 1 der Gasturbine zum Abhitzedampferzeuger 2 geleitet werden, wo sie in bekannter Weise genutzt werden, um Dampf für den Dampfturbinenkreislauf des GuD-Kraftwerks zu erzeugen.

Wenn das GuD-Kraftwerk hingegen im reinen Gasturbinenbetrieb gefahren werden soll, wird die Guillotine 7 in ihre in Figur 1 dargestellte untere Schließstellung abgesenkt, in welcher sie den Strömungskanal der Anströmhaube 3 vollständig verschließt, und wird die Abgasklappe 4b im Bypass-Kamin 4 geöffnet. Des Weiteren wird die Guillotine 7 anströmseitig mit der Sperrluft überströmt, um die Abdichtwirkung der Guillotine 7 zu unterstützen. Gleichzeitig wird die Guillotine 7 abströmseitig mit Kühlluft überströmt. Die heißen Abgase der Gasturbine werden dann über die Abgasleitungen 6a, 6b, 6c in den Bypass-Kamin 4 und von dort aus an die Umgebung abgeführt oder anderweitig genutzt. Hierbei bleibt der Abhitzedampferzeuger 2 passiv, hat also im reinen Gasturbinenbetrieb keine Funktion.

Der vorgesehene Bypass-Kamin 4 sowie die Guillotine 7 können auch in bestehende GuD-Kraftwerke leicht nachgerüstet werden. Hierzu ist es lediglich erforderlich, die Anströmhaube 3 mit entsprechenden Öffnungen zum Anschluss der Abgasleitungen 6a, 6b, 6c zu versehen. Des Weiteren muss ein Teil der Anströmhaube 3 herausgeschnitten werden, um in die Anströmhaube 3 die Guillotine 7 einbauen zu können. Die Verbindungsstrecke zwischen dem Abgasdiffusor 1 und dem Abhitzedampferzeuger 2 wird hierdurch nicht verändert, so dass auf eine Analyse des Temperaturkennfeldes bzw. eine neue Parametrierung der Gasturbineneinstellung verzichtet werden kann. Durch den Aufbau des Bypass-Kamins 4 oberhalb des Abgasdiffusors 1 bzw. der Anströmhaube 3 ist der benötigte Platzbedarf gering. Ebenso erfordert die Verbindung zwischen dem Bypass-Kamin 4 und der Anströmhaube 3 wenig Platzbedarf, weil die Abgase nicht über eine zentrale Leitung, sondern über mehrere Abgasleitungen 6a, 6b, 6c entsprechend kleineren Durchmessers geführt werden. Dabei stellt der Bypass-Kamin 4 mit eingebauter Abgasklappe 4b und dem Schalldämpfer 4a ein Standardbauteil dar, das ohne Probleme zugekauft werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gas-und-Dampfturbinen-Kraftwerk mit einer Gasturbine, die auslassseitig einen Abgasdiffusor (1) aufweist, und einem Abhitzedampferzeuger (2), welcher über eine Anströmhaube (3) mit der Auslassseite des Abgasdiffusors (1) der Gasturbine verbunden ist, um die in den entspannten Rauchgasen der Gasturbine enthaltene Wärme für die Erzeugung von Dampf in einem Dampfturbinenkreislauf zu nutzen, **dadurch gekennzeichnet, dass** an die Anströmhaube (3) mehrere Abgasleitungen (6a, 6b, 6c) angeschlossen sind, die oberhalb der Anströmhaube (3) in einen gemeinsamen Bypass-Kamin (4) münden, und dass Absperrmittel in der Anströmhaube (3) vorgesehen sind, um einen Rauchgasstrom von der Gasturbine zu dem Abhitzedampferzeuger (2) in einem geschlossenen Zustand zu unterbrechen und in einem offenen Zustand zu erlauben.

2. Gas-und-Dampfturbinen-Kraftwerk nach Anspruch 1,
**dadurch gekennzeichnet, dass**
eine Abgasleitung (6a, 6b, 6c) an die Oberseite der Anströmhaube (3) angeschlossen ist und insbesondere in die Unterseite des Bypass-Kamins (4) mündet.

3. Gas-und-Dampfturbinen-Kraftwerk nach Anspruch 1 oder 2,
**dadurch gekennzeichnet, dass**
wenigstens eine Abgasleitung (6a, 6b, 6c) seitlich an die Anströmhaube (3) angeschlossen ist, wobei insbesondere jeweils eine Abgasleitung (6a, 6b, 6c) an die gegenüberliegenden Seiten der Anströmhaube (3) angeschlossen ist.

4. Gas-und-Dampfturbinen-Kraftwerk nach Anspruch 3,
**dadurch gekennzeichnet, dass**
die seitlich an die Anströmhaube (3) angeschlossenen Abgasleitungen (6a, 6b, 6c) in den unteren Endbereich des Bypass-Kamins (4) auf gegenüberliegenden Seiten von diesem münden, wobei der untere Endbereich bevorzugt sich nach unten hin verjüngend ausgebildet ist.

5. Gas-und-Dampfturbinen-Kraftwerk nach einem der vorherigen Ansprüche,
die Absperrmittel eine Guillotine (7) aufweisen, die in vertikaler Richtung zwischen einer oberen Öffnungsstellung, in der sie den Gasstrom von der Gasturbine zu dem Abhitzedampferzeuger (2) freigibt, und einer unteren Schließstellung, in welcher sie einen Gasstrom von der Gasturbine zu dem Abhitzedampferzeuger (2) unterbricht, bewegbar geführt ist.

6. Gas-und-Dampfturbinen-Kraftwerk nach Anspruch 5,
**dadurch gekennzeichnet, dass**
an den Schnittstellen zwischen der Anströmhaube (3) und der Guillotine (7) Bleche, insbesondere in Rinnenform, zur Halterung der Guillotine (7) vorgesehen sind.

7. Gas-und-Dampfturbinen-Kraftwerk nach einem der vorherigen Ansprüche,
**dadurch gekennzeichnet, dass**
auf der Gasturbinenseite der Absperrmittel eine Sperrluftzuführung (a) an die Anströmhaube (3) angeschlossen ist, um die Absperrmittel anströmseitig mit Sperrluft zu versorgen und so die Gasdichtheit der Absperrmittel im geschlossenen Zustand zu gewährleisten.

8. Gas-und-Dampfturbinen-Kraftwerk nach einem der vorherigen Ansprüche,
**dadurch gekennzeichnet, dass**
auf der zum Abhitzedampferzeuger (2) weisenden Seite der Absperrmittel eine Kühlluftzuführung (10) an die Anströmhaube (3) angeschlossen ist, um die Absperrmittel abströmseitig über zugeführte Kühlluft im geschlossenen Zustand zu kühlen.

9. Gas-und-Dampfturbinen-Kraftwerk nach einem der vorherigen Ansprüche,
**dadurch gekennzeichnet, dass**
der Bypass-Kamin (4) einen Schalldämpfer (4a) aufweist.

10. Gas-und-Dampfturbinen-Kraftwerk einem der vorherigen Ansprüche,
**dadurch gekennzeichnet, dass**
im Bypass-Kamin (4) eine Abgasklappe (4b) vorgesehen ist, welche ausgebildet ist, einen Abgasstrom durch den Bypass-Kamin (4) im geschlossenen Zustand zu unterbrechen und im geöffneten Zustand zu erlauben.

11. Verfahren zur Nachrüstung eines Gas- und Dampfturbinen-Kraftwerks mit einer Gasturbine, die auslassseitig einen Abgasdiffusor (1) aufweist, und einem Abhitzedampferzeuger (2), welcher über eine Anströmhaube (3) mit der Auslassseite des Abgasdiffusors (1) der Gasturbine verbunden ist, um die in den entspannten Rauchgasen der Gasturbine enthaltene Wärme für die Erzeugung von Dampf in einem Dampfturbinenkreislauf zu nutzen,
**dadurch gekennzeichnet, dass**
die Anströmhaube (3) mit mehreren Öffnungen versehen wird, dass an die Anströmhaube (3) im Bereich der Öffnungen Abgasleitungen (6a, 6b, 6c) angeschlossen werden, so dass diese sich in einen Bereich oberhalb der Anströmhaube (3) erstrecken, und dass in der Anströmhaube (3) Absperrmittel vorgesehen werden, um einen Gasstrom von der Gasturbine zu dem Abhitzedampferzeuger (2) in einem geschlossenen Zustand zu unterbrechen und in einem geöffneten Zustand zu erlauben.

12. Verfahren nach Anspruch 11,
**dadurch gekennzeichnet, dass**
die Öffnungen an der Oberseite und/oder seitlich in der Anströmhaube (3) vorgesehen werden, wobei insbesondere jeweils eine Öffnung in den gegenüberliegenden Seiten der Anströmhaube (3) vorgesehen, und dass an die Anströmhaube (3) im Bereich der Öffnungen Abgasleitungen (6a, 6b, 6c) angeschlossen werden.

13. Verfahren nach Anspruch 11 oder 12,
**dadurch gekennzeichnet, dass**
aus der Anströmhaube (3) ein Teil herausgetrennt wird, um einen Einbauraum zu schaffen, in welchem die Absperrmittel vorgesehen werden.

14. Verfahren nach Anspruch 13,
**dadurch gekennzeichnet, dass**
das Absperrmittel in der Form einer Guillotine (7) in der Anströmhaube (3) vorgesehen werden, die in vertikaler Richtung zwischen einer oberen Öffnungsstellung, in der sie den Gasstrom von der Gasturbine zu dem Abhitzedampferzeuger (2) freigibt, und einer unteren Schließstellung, in welcher sie einen Gasstrom von der Gasturbine zu dem Abhitzedampferzeuger (2) unterbricht, bewegbar geführt ist.

15. Verfahren nach Anspruch 14,
**dadurch gekennzeichnet, dass**
an den Schnittstellen zwischen der Anströmhaube (3) und der Guillotine (7) Bleche, insbesondere in Rinnenform, zur Halterung der Guillotine (7) vorgesehen werden.

16. Verfahren nach einem der Ansprüche 11 bis 15,
**dadurch gekennzeichnet, dass**
auf der Gasturbinenseite der Absperrmittel eine Sperrluftzuführung (a) an die Anströmhaube (3) angeschlossen wird, um die Absperrmittel anströmseitig mit Sperrluft zu versorgen und so die Gasdichtheit der Absperrmittel im geschlossenen Zustand zu gewährleisten.

17. Verfahren nach einem der Ansprüche 11 bis 16,
**dadurch gekennzeichnet, dass**
auf der zum Abhitzedampferzeuger (2) weisenden Seite der Absperrmittel eine Kühlluftzuführung (10) an die Anströmhaube (3) angeschlossen wird, um die Absperrmittel abströmseitig überzugeführte Kühlluft im geschlossenen Zustand zu kühlen.

18. Verfahren nach einem der Ansprüche 11 bis 17,
**dadurch gekennzeichnet, dass**
oberhalb der Anströmhaube (3) ein Bypass-Kamin (4) vorgesehen wird, an welchen die Abgasleitungen (6a, 6b, 6c) angeschlossen werden, wobei bevorzugt der Bypass-Kamin (4) einen Schalldämpfer aufweist und/oder im Bypass-Kamin (4) eine Abgasklappe (4a) vorgesehen ist, welche ausgebildet ist, einen Abgasstrom durch den Bypass-Kamin (4) im geschlossenen Zustand zu unterbrechen und im geöffneten Zustand zu erlauben.

## Claims

1. Gas and steam turbine power plant with a gas turbine which has an exhaust gas diffuser (1), and a heat recovery steam generator (2) which is connected via an inflow hood (3) to the outlet side of the exhaust gas diffuser (1) of the gas turbine, in order to utilize the heat contained in the expanded flue gases of the gas turbine for the generation of steam in a steam turbine circuit, **characterized in that** a plurality of exhaust gas lines (6a, 6b, 6c) are connected to the inflow hood (3), which exhaust gas lines (6a, 6b, 6c) open above the inflow hood (3) into a common bypass flue (4), and **in that** shut-off means are provided in the inflow hood (3), in order to interrupt a flue gas flow from the gas turbine to the heat recovery steam generator (2) in a closed state and to allow it in an open state.

2. Gas and steam turbine power plant according to Claim 1,
**characterized in that**
an exhaust gas line (6a, 6b, 6c) is connected to the upper side of the inflow hood (3) and opens, in particular, into the lower side of the bypass flue (4).

3. Gas and steam turbine power plant according to Claim 1 or 2,
**characterized in that**
at least one exhaust gas line (6a, 6b, 6c) is connected laterally to the inflow hood (3), in each case one exhaust gas line (6a, 6b, 6c) being connected, in particular, to the opposite sides of the inflow hood (3).

4. Gas and steam turbine power plant according to Claim 3,
**characterized in that**
the exhaust gas lines (6a, 6b, 6c) which are connected laterally to the inflow hood (3) open into the lower end region of the bypass flue (4) on opposite sides of the latter, the lower end region preferably being of downwardly tapering configuration.

5. Gas and steam turbine power plant according to one of the preceding claims,
the shut-off means have a guillotine (7) which is guided movably in the vertical direction between an upper open position, in which it releases the gas flow from the gas turbine to the heat recovery steam generator (2), and a lower closed position, in which it interrupts a gas flow from the gas turbine to the heat recovery steam generator (2).

6. Gas and steam turbine power plant according to Claim 5,
**characterized in that**
metal plates, in particular of a gutter type, for securing the guillotine (7) are provided at the interfaces between the inflow hood (3) and the guillotine (7).

7. Gas and steam turbine power plant according to one of the preceding claims,
**characterized in that**
a sealing air feed (a) is connected to the inflow hood (3) on the gas turbine side, in order to supply the shut-off means with sealing air on the inflow side and thus to ensure the gas tightness of the shut-off means in the closed state.

8. Gas and steam turbine power plant according to one of the preceding claims,
**characterized in that**
a cooling air feed (10) is connected to the inflow hood (3) on that side of the shut-off means which points towards the heat recovery steam generator (2), in order to cool the shut-off means on the outflow side via supplied cooling air in the closed state.

9. Gas and steam turbine power plant according to one of the preceding claims,
**characterized in that**
the bypass flue (4) has a silencer (4a).

10. Gas and steam turbine power plant according to one of the preceding claims,
**characterized in that**
a flue gas damper (4b) is provided in the bypass flue (4), which flue gas damper (4b) is configured to interrupt an exhaust gas flow through the bypass flue (4) in the closed state and to allow it in the open state.

11. Method for retrofitting a gas and steam turbine power plant with a gas turbine which has an exhaust gas diffuser (1) on the outlet side, and a heat recovery steam generator (2) which is connected via an inflow hood (3) to the outlet side of the exhaust gas diffuser (1) of the gas turbine, in order to utilize the heat contained in the expanded flue gases of the gas turbine for the generation of steam in a steam turbine circuit,
**characterized in that**
the inflow hood (3) is provided with a plurality of openings, **in that** exhaust gas lines (6a, 6b, 6c) are connected to the inflow hood (3) in the region of the openings, with the result that they extend into a region above the inflow hood (3), and **in that** shut-off means are provided in the inflow hood (3), in order to interrupt a gas flow from the gas turbine to the heat recovery steam generator (2) in a closed state and to allow it in an open state.

12. Method according to Claim 11,
**characterized in that**
the openings are provided on the upper side and/or laterally in the inflow hood (3), in each case one opening being provided, in particular, in the opposite sides of the inflow hood (3), and **in that** exhaust gas lines (6a, 6b, 6c) are connected to the inflow hood (3) in the region of the openings.

13. The method according to Claim 11 or 12,
**characterized in that**
a part is removed from the inflow hood (3), in order to provide an installation space, in which the shut-off means are provided.

14. Method according to Claim 13,
**characterized in that**
the shut-off means are provided in the inflow hood (3) in the form of a guillotine (7) which is guided movably in the vertical direction between an upper open position, in which it releases the gas flow from the gas turbine to the heat recovery steam generator (2), and a lower closed position, in which it interrupts a gas flow from the gas turbine to the heat recovery steam generator (2).

15. Method according to Claim 14,
**characterized in that**
metal plates, in particular of a gutter type, for securing the guillotine (7) are provided at the interfaces between the inflow hood (3) and the guillotine (7).

16. Method according to one of Claims 11 to 15,
**characterized in that**
a sealing air feed (a) is connected to the inflow hood (3) on the gas turbine side, in order to supply the shut-off means with sealing air on the inflow side and thus to ensure the gas tightness of the shut-off means in the closed state.

17. Method according to one of Claims 11 to 16,
**characterized in that**
a cooling air feed (10) is connected to the inflow hood (3) on that side of the shut-off means which points towards the heat recovery steam generator (2), in order to cool the shut-off means on the outflow side via supplied cooling air in the closed state.

18. Method according to one of Claims 11 to 17,
**characterized in that**
a bypass flue (4), to which the exhaust gas lines (6a, 6b, 6c) are connected, is provided above the inflow hood (3), the bypass flue (4) preferably having a silencer and/or a flue gas damper (4a) being provided in the bypass flue (4), which flue gas damper (4a) is configured to interrupt an exhaust gas flow through the bypass flue (4) in the closed state and to allow it in the open state.

## Revendications

1. Centrale électrique à turbine à gaz et à turbine à vapeur comprenant une turbine à gaz, qui a, du côté de la sortie, un diffuseur (1) de gaz d'échappement, et un générateur (2) de vapeur à récupération de la chaleur perdue, qui communique par une hotte (3) d'afflux avec le côté de sortie du diffuseur (1) de gaz d'échappement de la turbine à gaz, afin d'utiliser la chaleur contenue dans les gaz de fumée détendus de la turbine à gaz pour la production de vapeur dans un circuit de turbine à vapeur, **caractérisée en ce que** à la hotte (3) d'afflux sont raccordés plusieurs conduits (6a, 6b, 6c) pour des gaz d'échappement, qui débouchent au-dessus de la hotte (3) d'afflux dans une cheminée (4) commune de dérivation, et **en ce qu'**il est prévu des moyens d'arrêt dans la hotte (3) d'afflux afin d'interrompre dans un état fermé un courant de gaz de fumée de la turbine à gaz au générateur (2) de vapeur à récupération de la chaleur perdue et de l'autoriser dans un état ouvert.

2. Centrale électrique à turbine à gaz et à turbine à vapeur suivant la revendication 1,
**caractérisée en ce que**
un conduit (6a, 6b, 6c) pour des gaz d'échappement est raccordé au côté supérieur de la hotte (3) d'afflux et débouche en particulier dans le côté inférieur de la cheminée (4) de dérivation.

3. Centrale électrique à turbine à gaz et à turbine à vapeur suivant la revendication 1 ou 2,
**caractérisée en ce que**
au moins un conduit (6a, 6b, 6c) pour des gaz d'échappement est raccordé latéralement à la hotte (3) d'afflux, dans laquelle en particulier respectivement un conduit (6a, 6b, 6c) pour des gaz d'échappement est raccordé aux côtés opposés de la hotte (3) d'afflux.

4. Centrale électrique à turbine à gaz et à turbine à vapeur suivant la revendication 3,
**caractérisée en ce que**
les conduits (6a, 6b, 6c) pour des gaz d'échappement, raccordés latéralement à la hotte (3) d'afflux, débouchent dans la partie d'extrémité inférieure de la cheminée (4) de dérivation sur des côtés opposés de celle-ci, la partie d'extrémité inférieure étant constituée, de préférence, en se rétrécissant vers le bas.

5. Centrale électrique à turbine à gaz et à turbine à vapeur suivant l'une des revendications précédentes,
les moyens d'arrêt ont une guillotine (7), qui est guidée de manière mobile dans la direction verticale entre une position supérieure d'ouverture, dans laquelle elle autorise le courant de gaz de la turbine à gaz au générateur (2) de vapeur à récupération de la chaleur perdue et une position inférieure de fermeture, dans laquelle, elle interrompt un courant de gaz de la turbine à gaz au générateur (2) de vapeur à récupération de la chaleur perdue.

6. Centrale électrique à turbine à gaz et à turbine à vapeur suivant la revendication 5,
**caractérisée en ce que**
aux interfaces entre la hotte (3) d'afflux et la guillotine (7), sont prévues des tôles, en particulier sous forme de goulotte, pour le maintien de la guillotine (7).

7. Centrale électrique à turbine à gaz et à turbine à vapeur suivant l'une des revendications précédentes,
**caractérisée en ce que**
du côté de la turbine à gaz des moyens d'arrêt, une arrivée (a) d'air d'arrêt est raccordée à la hotte (3) d'afflux, afin d'alimenter les moyens d'arrêt du côté de l'afflux en air d'arrêt et d'assurer ainsi l'étanchéité au gaz des moyens d'arrêt dans l'état fermé.

8. Centrale électrique à turbine à gaz et à turbine à vapeur suivant l'une des revendications précédentes,
**caractérisée en ce que**
du côté, tourné vers le générateur (2) de vapeur à récupération de la chaleur perdue, des moyens d'arrêt, une arrivée (10) d'air de refroidissement est raccordée à la hotte (3) d'afflux, afin de refroidir dans l'état fermé les moyens d'arrêt du côté de l'évacuation par l'arrivée d'air de refroidissement.

9. Centrale électrique à turbine à gaz et à turbine à vapeur suivant l'une des revendications précédentes,
**caractérisée en ce que**
la cheminée (4) de dérivation a un amortisseur (4a) du son.

10. Centrale électrique à turbine à gaz et à turbine à vapeur suivant l'une des revendications précédentes,
**caractérisée en ce que**
dans la cheminée (4) de dérivation est prévu un volet (4b) pour les gaz d'échappement, qui est constitué pour interrompre un courant de gaz d'échappement dans la cheminée (4) de dérivation à l'état fermé et pour l'autoriser dans l'état ouvert.

11. Procédé de rééquipement d'une centrale électrique à turbine à gaz et à turbine à vapeur comprenant une turbine à gaz, qui a, du côté de la sortie, un diffuseur (1) de gaz d'échappement, et un générateur (2) de vapeur à récupération de la chaleur perdue, qui communique par une hotte (3) d'afflux avec le côté de sortie du diffuseur (1) de gaz d'échappement de la turbine à gaz, afin d'utiliser la chaleur contenue dans les gaz de fumée détendus de la turbine à gaz pour la production de vapeur dans un circuit de turbine à vapeur,
**caractérisé en ce que**
on munit la hotte (3) d'afflux de plusieurs ouvertures, **en ce qu'**on raccorde à la hotte (3) d'afflux, dans la partie des ouvertures, des conduits (6a, 6b, 6c) pour des gaz d'échappement, de manière à ce qu'ils s'étendent dans une partie au-dessus de la hotte (3) d'afflux, et **en ce que** l'on prévoit dans la hotte (3) d'afflux des moyens d'arrêt pour interrompre un courant de gaz de la turbine à gaz au générateur (2) de vapeur à récupération de la chaleur perdue dans un état fermé et à l'autoriser dans un état ouvert.

12. Procédé suivant la revendication 11,
**caractérisé en ce que** l'
on prévoit les ouvertures du côté supérieur de la hotte (3) d'afflux et/ou latéralement à celles-ci, dans lequel en particulier, on prévoit respectivement une ouverture dans les côtés opposés de la hotte (3) d'afflux et **en ce que** l'on raccorde des conduits (6a, 6b, 6c) pour des gaz d'échappement à la hotte (3) d'afflux dans la partie des ouvertures.

13. Procédé suivant la revendication 11 ou 12,
**caractérisé en ce que**
on sépare de la hotte (3) d'afflux une partie pour ménager un espace de montage, dans lequel on prévoit des moyens d'arrêt.

14. Procédé suivant la revendication 13,
**caractérisé en ce que** l'
on prévoit dans la hotte (3) d'afflux des moyens d'arrêt sous la forme d'une guillotine (7), qui est guidée de manière mobile dans la direction verticale entre une position supérieure d'ouverture, dans laquelle elle autorise le courant de gaz de la turbine à gaz au générateur (2) de vapeur à récupération de la chaleur perdue et une position inférieure de fermeture, dans laquelle elle interrompt un courant de gaz de la turbine à gaz au générateur (2) de vapeur à récupération de la chaleur perdue.

15. Procédé suivant la revendication 14,
**caractérisé en ce que** l'
on prévoit aux interfaces entre la hotte (3) d'afflux et la guillotine (7), des tôles, en particulier sous forme de goulotte, pour le maintien de la guillotine (7).

16. Procédé suivant l'une des revendications 11 à 15,
**caractérisé en ce que**
du côté de la turbine à gaz des moyens d'arrêt, on raccorde une arrivée (a) d'air d'arrêt à la hotte (3) d'afflux, afin d'alimenter en air d'arrêt du côté de l'afflux les moyens d'arrêt et d'assurer ainsi l'étanchéité au gaz des moyens d'arrêt dans l'état fermé.

17. Procédé suivant l'une des revendications 11 à 16,
**caractérisé en ce que**
du côté, tourné vers le générateur (2) de vapeur à récupération de la chaleur perdue, des moyens d'arrêt, on raccorde une arrivée (10) d'air de refroidissement à la hotte (3) d'afflux, afin de refroidir dans l'état fermé les moyens d'arrêt du côté de l'évacuation par l'arrivée d'air de refroidissement.

18. Procédé suivant l'une des revendications 11 à 17,
**caractérisé en ce que** l'
on prévoit au-dessus de la hotte (3) d'afflux une cheminée (4) de dérivation, à laquelle on raccorde les conduits (6a, 6b, 6c) pour des gaz d'échappement, dans lequel de préférence, la cheminée (4) de dérivation a un amortisseur de son et/ou il est prévu dans la cheminée (4) de dérivation un volet (4a) pour les gaz d'échappement, qui est constitué pour interrompre un courant de gaz d'échappement dans la cheminée (4) de dérivation à l'état fermé et pour l'autoriser à l'état ouvert.
